# EUROPEAN PATENT APPLICATION

(11) **EP 2 334 092 A1**
(43) Date of publication of application: **15.06.2011**
(21) Application number: 10193929.6
(22) Date of filing: 07.12.2010
(51) Int. Cl.: H04N 13/00, H04N 7/26

(54) **Methods and apparatuses for encoding, decoding, and displaying a stereoscopic 3D image**

(30) Priority: 07.12.2009 KR 20090120647
(71) Applicant: SAMSUNG ELECTRONICS CO., LTD., Suwon-si Gyeonggi-do 442-742 (KR)
(72) Inventor: Shin, Dong-han, Suwon-si, Gyeonggi-do (KR)
(74) Representative: Robinson, Ian Michael

(57) **Abstract**

A method and an apparatus for encoding a 3D image (400), decoding a three-dimensional (3D) image, and 3D image display apparatus and system that reduce capacity and transmission bandwidth of a 3D image content. In a 3D image (400), 3D image frames (401, 402, 403, 404) may include similar images to be viewed by right and left eyes of a viewer to produce a stereoscopic effect. To increase coding efficiency and reduce a bandwidth required to transmit the 3D image (400), the 3D image frames (411) to be viewed by one of the viewer's eyes may be encoded based on the similar 3D image frames (412) to be viewed by the other of the viewer's eyes.

## Description

### CROSS-REFERENCE TO RELATED APPLICATIONS

This application claims priority from Korean Patent Application No. 10-2009-120647, filed December 7, 2009, in the Korean Intellectual Property Office, the disclosure of which is incorporated herein by reference in its entirety.

### BACKGROUND

### 1. Field

Apparatuses and methods consistent with exemplary embodiments of the disclosure relate to a method and an apparatus for encoding a stereoscopic three-dimensional (3D) image, and a display apparatus and a system for displaying the stereoscopic 3D image, and more specifically, to a content encoding method for the 3D image.

### 2. Description of the Related Art

Three-dimensional (3D) stereoscopy is adopted in various fields, such as information communication, broadcasting, medical care, educational training, military, computer gaming, animation, virtual space, CAD, and industrial technology, and is the core technology of next-generation 3D stereoscopic multimedia information communications.

In general, human beings perceive relative depths using thickness variation of lenses, based on a location of an object, to perceive an angle difference between both eyes and the object, location and shape differences of the object perceived by the eyes, a time difference according to movement of the object, psychology, and effect from memories.

Among the above, binocular disparity, which results from the horizontal separation about 6 ∼7 cm between two eyes of the human, is the most important factor in stereopsis. In particular, human beings perceive the object with an angle difference because of the binocular disparity, the two retinal images have different images, and the two images are input to the brain through the retinas. The brain can create the original 3D stereoscopic vision by accurately uniting the two images received from the retinas.

3D image display apparatuses may be categorized into a glass that requires the use of special glasses and a non-glass type that does not require special glasses. The glass type includes a color filter scheme, which separates and selects the image using complementary color filters, a polarized filter scheme, which separates left-eye and right-eye images by restricting light using a combination of orthogonal polarizing elements, and a shutter glass scheme, which creates the illusion of the 3D image by alternately darkening over the left eye and the right eye in correspondence with a synchronization signal to project the left-eye image signal and the right-eye image signal on the screen.

The 3D image includes a left-eye image that is perceived by the left eye and a right-eye image that is perceived by the right eye. A 3D display apparatus represents the stereoscopic image using the disparity between the left-eye image and the right-eye image.

However, since the stereoscopic 3D image includes the left-eye image and the right-eye image within one frame, data size of the 3D image is almost double the data size of a two-dimensional (2D) image size. Accordingly, to transmit the stereoscopic 3D image, an increased bandwidth, which is almost double the bandwidth required to transmit the 2D image, is required.

In this regard, a method for efficiently encoding the stereoscopic 3D image is needed.

### SUMMARY

Exemplary embodiments overcome the above disadvantages and other disadvantages not described above. Also, exemplary embodiments are not required to overcome the disadvantages described above, and an exemplary embodiment may not overcome any of the problems described above.

The present inventive concept provides a method and an apparatus for efficiently encoding a stereoscopic 3D image, and a display apparatus and a system for displaying the 3D image.

Another aspect of the present inventive concept is to provide a method for reducing a capacity and a transmission bandwidth of a 3D image content by encoding image frames based on one of left-eye image frames and right-eye image frames.

Yet another aspect of the present inventive concept is to provide an apparatus for generating a low-capacity 3D image content by encoding image frames based on one of left-eye image frames and right-eye image frames.

Still another aspect of the present inventive concept is to provide a 3D image display apparatus for decoding the encoded image, displaying the decoded image, and providing a stereoscopic 3D image to a user.

According to an aspect of the present inventive concept, a method for encoding a three-dimensional (3D) image as an encoded 3D image includes receiving a 3D image, the 3D image including a first image frame, a second image frame, and a third image frame, the first image frame including a fist left-eye image frame and a first right-eye image frame and the second image frame including a second left-eye image frame and a second right-eye image frame; dividing the first image frame into the left-eye image frame and the right-eye image frame and dividing the second image frame into the second left-eye image frame and the second right-eye image frame; encoding the first left-eye image frame and encoding the second left-eye image frame; and encoding at least one of the first right-eye image frame, the second right-eye image frame, and a third right-eye image frame that is divided from the third image frame, based on at least one of the encoded first left-eye image frame and the encoded second left-eye image frame, as an encoded right-eye image frame.

The encoding may encode the first left-eye image frame as one of a first left-eye image I frame, a first left-eye image P frame, and a first left-eye image B frame, and may encode the at least one of the first right-eye image frame, the second right-eye image frame, and the third right-eye image frame comprises forward prediction encoding the at least one of the first right-eye image frame, the second right-eye image frame, and the third right-eye image frame, based on the one of the first left-eye image I frame, the first left-eye image P frame, and the first left-eye image B frame, as the encoded right-eye image frame.

The encoding may encode the first left-eye image frame as one of a first left-eye image I frame, a first left-eye image P frame, and a first left -eye image B frame, and may encode the at least one of the first right-eye image frame, the second right-eye image frame, and the third right-eye image frame comprises bidirectional prediction encoding the at least one of the first right-eye image frame, the second right-eye image frame, and the third right-eye image frame, based on the one of the first left-eye image I frame, the first left-eye image P frame, and the first left-eye image B frame, as the encoded right-eye image frame.

The encoding may encode the at least one of the first right-eye image frame, the second right-eye image frame, and the third right-eye image frame as the encoded right-eye image frame, and the method may further include merging the encoded first left-eye image frame and the encoded right-eye image frame as a first encoded image frame of the encoded 3D image.

According to another aspect of the present inventive concept, an apparatus for encoding a three-dimensional (3D) image as an encoded 3D image may include a receiver that receives a 3D image, the 3D image including a first image frame, a second image frame, and a third image frame, the first image frame including a fist left-eye image frame and a first right-eye image frame and the second image frame including a second left-eye image frame and a second right-eye image frame; a splitter that divides the first image frame into the left-eye image frame and the right-eye image frame and dividing the second image frame into the second left-eye image frame and the second right-eye image frame; and an encoder that encodes the first left-eye image frame, encodes the second left-eye image frame, and encodes at least one of the first right-eye image frame, the second right-eye image frame, and a third right-eye image frame that is divided from the third image frame, based on at least one of the encoded first left-eye image frame and the encoded second left-eye image frame, as an encoded right-eye image frame.

The encoder may encode the first left-eye image frame as one of a first left-eye image I frame, a first left-eye image P frame, and a first left-eye image B frame, and forward prediction encode the at least one of the first right-eye image frame, the second right-eye image frame, and the third right-eye image frame, based on the one of the first left-eye image I frame, the first left-eye image P frame, and the first left-eye image B frame, as the encoded right-eye image frame.

The encoder may encode the first-left eye image frame as one of a first left-eye image I frame, a first left-eye image P frame, and a first left-side image B frame, and bidirectional prediction encode the at least one of the first right-eye image frame, the second right-eye image frame, and the third right-eye image frame, based on the one of the first side image I frame, the first left-eye image P frame, and the first left-eye image B frame, as the encoded right-eye image frame.

The encoder may encode the first right-eye image frame as the encoded right-eye image frame, and the apparatus may further include a combiner that merges the encoded first left-eye image frame and the encoded right-eye image frame as a first encoded image frame of the encoded 3D image.

The apparatus may further include a recorder that records the encoded 3D image to a storage medium.

The storage medium may be a DVD or a blu-ray disc.

According to yet another aspect of the present inventive concept, three-dimensional (3D) image display apparatus that outputs a 3D image, may include a receiver that receives an encoded 3D image, the encoded 3D image including an encoded first image frame, an encoded second image frame, and an encoded third image frame, the encoded first image frame including an encoded first left-eye image frame and an encoded first right-eye image frame, the second encoded image frame including a second encoded left-eye image frame and a second encoded right-eye image frame, and the third encoded image frame including an encoded third left-eye image frame and an encoded third right-eye image frame, wherein at least one of the encoded first right-eye image frame, the encoded second right-eye image frame, and the encoded third right-eye image frame is encoded based on at least one of the encoded first left-eye image frame and the encoded second left-eye image frame; an image processor that decodes the encoded 3D image; and an image output part that displays the decoded 3D image as the 3D image.

The encoded first left-eye image frame may be one of a first left-eye image I frame, a first left-eye image P frame, and a first left-eye image B frame, and the at least one of the encoded first right-eye image frame, the encoded second right-eye image frame, and the encoded third right-eye image frame may be forward prediction encoded based on the one of the first left-eye image I frame, the first left-eye image P frame, and the first left-eye image B frame.

The encoded first left-eye image frame may be one of a first left-eye image I frame, a first left-eye image P frame, and a first left-eye image B frame, and at the at least one of the encoded first right-eye image frame, the encoded second right-eye image frame, and the encoded third right-eye image frame may be bidirectional prediction encoded based on the one of the first left-eye image I frame, the first left-eye image P frame, and the first left-eye image B frame.

The image processor may decode the at least one of the encoded first right-eye image frame, the encoded second right-eye image frame, and the encoded third right-eye image frame based on at least one of the encoded first left-eye image frame and the encoded second left-eye image frame.

According to still another aspect of the present inventive concept, a 3D image system may include a first transmitting apparatus that transmits a 3D image, the 3D image including a first image frame, a second image frame, and a third image frame, the first image frame including a fist left-eye image frame and a first right-eye image frame and the second image frame including a second left-eye image frame and a second right-eye image frame; a second transmitter that receives the 3D image transmitted by the first transmitting apparatus, divides the first image frame into the left-eye image frame and the right-eye image frame and divides the second image frame into the second left-eye image frame and the second right-eye image frame, encodes at least one of the first right-eye image frame, the second right-eye image frame, and a third right-eye image frame that is divided from the third image frame, based on at least one of the encoded first left-eye image frame and the encoded second left-eye image frame, as an a portion of an encoded 3D image, and transmits the encoded 3D image; and a receiving apparatus that receives the encoded 3D image, decodes the received 3D image, and displays the decoded 3D image on a display.

The receiving apparatus may decode the at least one of the encoded first right-eye image frame, the encoded second right-eye image frame, and the encoded third right-eye image frame based on at least one of the encoded first left-eye image frame and the encoded second left-eye image frame.

The receiving apparatus may be a 3D television which displays the 3D image.

### BRIEF DESCRIPTION OF THE DRAWINGS

The above and/or other aspects of the present inventive concept will become more apparent by describing certain exemplary embodiments with reference to the accompanying drawings, in which:

FIG 1 illustrates the principle of a 3D image;

FIG 2 illustrates a method for generating 3D image content;

FIG 3 illustrates a 3D image encoding system according to an exemplary embodiment;

FIG 4 is a block diagram of a 3D image encoding apparatus according to an exemplary embodiment;

FIG 5 illustrates a 3D image encoding method according to an exemplary embodiment;

FIG 6 illustrates the 3D image encoding method according to an exemplary embodiment;

FIG 7 is a flowchart of the 3D image encoding method according to an exemplary embodiment;

FIG 8 illustrates a 3D image display apparatus according to another exemplary embodiment; and

FIG 9 is a block diagram of a 3D image display apparatus according to yet another exemplary embodiment.

### DETAILED DESCRIPTION OF EXEMPLARY EMBODIMENTS

Exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of the exemplary embodiments. However, the present inventive concept can be practiced without those specifically defined matters. Also, well-known functions or constructions are not described in detail since they would obscure the invention with unnecessary detail.

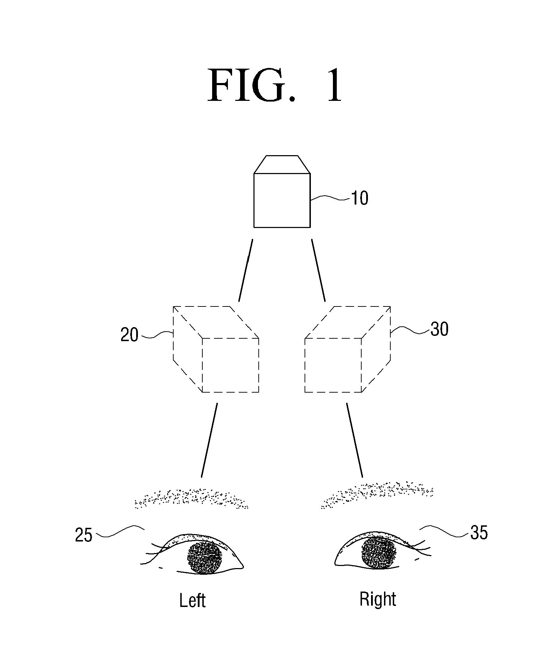

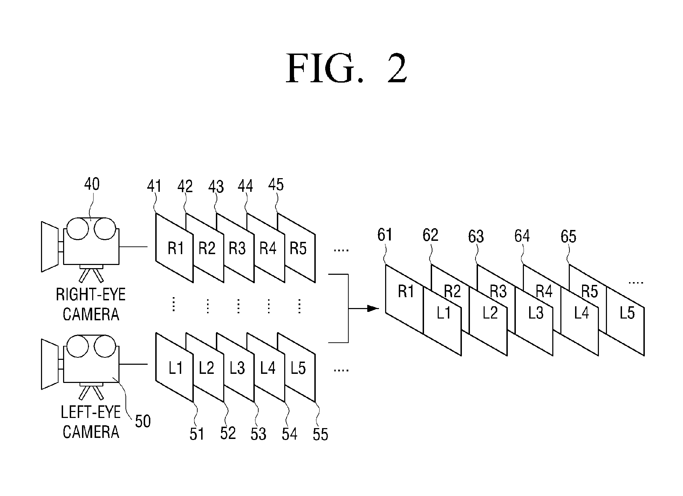

Referring to FIGS. 1 and 2, the principle of a 3D image and a method for creating a 3D image content are explained.

As shown in FIG 1, a person may look at an object 10. The person may have a left eye 25 and a right eye 35, which are horizontally spaced apart by about 6 ∼ 7 cm. As a result, an image 20 of the object perceived by the left eye 25 and an image 30 of the object perceived by the right eye 35 do not match. When the different 2D images 20 and 30 are input to the brain via retinas, the brain combines the 2D images 20 and 30 to create the illusion of depth and the presence of the 3D image. This process is referred to as a stereoscopy.

Thus, a technique for photographing a 3D image involves separately generating two 2D images that may be captured by two cameras using the binocular disparity. Thus, the stereoscopic image may be provided to a display panel.

As shown in FIG 2, a right-eye camera 40 generates right-eye image data from the images 41 through 45 perceived by the right eye of a user, and a left-eye camera 50 generates left-eye image data from the images 51 through 55 perceived by the right eye of a user. The generated data are contained in one data frame region to generate 3D image data 61 through 65.

That is, the 3D image data 61 through 65 respectively include both of the left-eye image data 41 to 45 and the right-eye image data 51 to 55 in one frame.

As such, the 3D image data includes the left-eye image data and the right-eye image data in one data frame region. A type of the 3D image data may be classified according to a pattern including the left-eye image data and the right-eye image data.

Based on the pattern of the 3D image data including the left-eye image data and the right-eye image data, an interleave scheme and a split scheme are classified. The interleave scheme includes a horizontal interleaved scheme, a vertical interleaved scheme, and a checker board scheme. The 3D image data of the split scheme is divided to a side by side scheme and an above-below scheme.

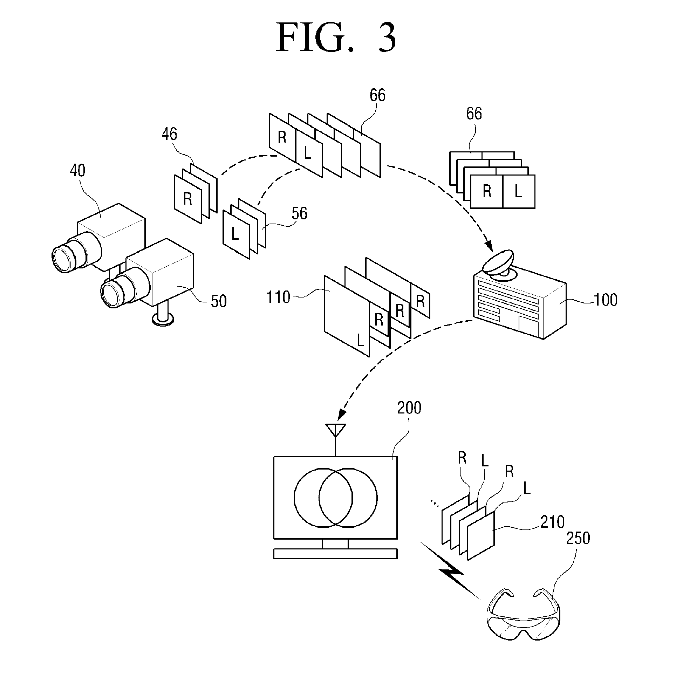

Now, a 3D image encoding system according to an exemplary embodiment is described by referring to FIG 3.

The 3D image encoding system includes a first transmitting apparatus (not shown), a second transmitting apparatus 100, and a receiving apparatus 200. Herein, the first transmitting apparatus generates a 3D image 66 and sends the generated image 66 to the second transmitting apparatus 200.

The 3D image 66 may be generated, for example, by including the right-eye image 46 obtained from the right-eye camera 40, as illustrated in FIG 2, and the left-eye image 56 obtained from the left-eye camera 50, as also illustrated in FIG 2, in one frame.

Next, the second transmitting apparatus 100 receiving the 3D image 66 from the first transmitting apparatus encodes the received image 66. The second transmitting apparatus 100 may encode the received image 66 by splitting the received 3D image 66 into left-eye image frames corresponding to the left-eye image and a right-eye image frames corresponding to the right-eye images, and encoding other image frames based on one of the left-eye image frames and the right-eye image frames.

The encoded image 110 generated through the encoding is transmitted from the second transmitting apparatus 100 to the receiving apparatus 200. The receiving apparatus 200 decodes the received encoded image 110 and displays the decoded image 210. The decoded image 210 includes decoded left-eye images and decoded right-eye images. Herein, the receiving apparatus 200 may be a display apparatus such as, for example, a 3D television (TV).

The receiving apparatus 200 is capable of communicating with glasses 250, as shown in FIG 3. Further, the receiving apparatus 200 generates and alternately displays the decoded left-eye image and the decoded right-eye image. A user can view the 3D image by alternately perceiving the left-eye image and the right-eye image displayed by the receiving apparatus 200 with the left eye and the right eye using the glasses 250.

More specifically, the receiving apparatus 200 alternately displays the left-eye image and the right-eye image on a screen at regular time intervals, generates a sync signal for the generated left-eye image and right-eye image, and sends the generated sync signal to the glasses 250. By receiving the sync signal from the receiving apparatus 200, the glasses 250 alternately open a left-eye glass and a right-eye glass to synchronize with the left-eye image and the right-eye image displayed at the receiving apparatus 200.

Thus, by means of the receiving apparatus 200 and the glasses 250, the user can view the stereoscopic 3D image.

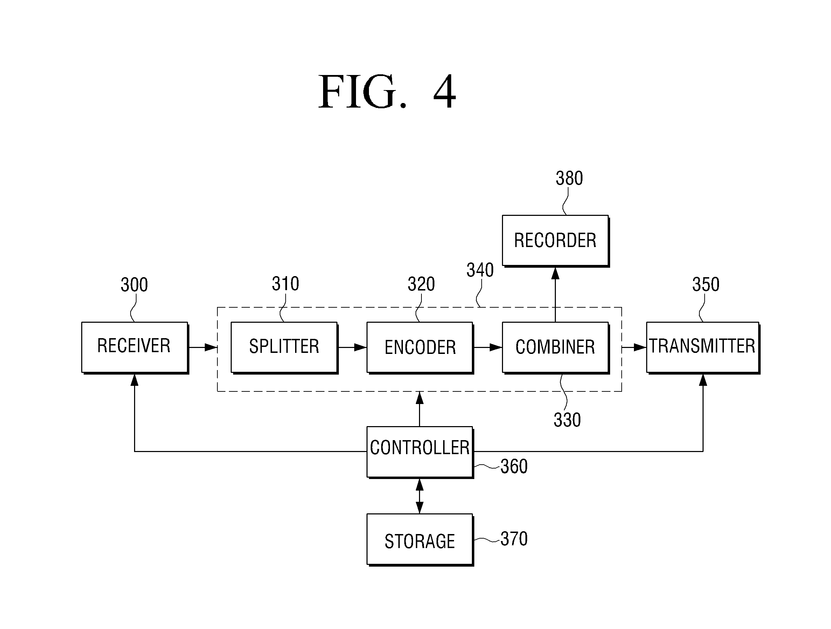

Referring now to FIG 4, a 3D image encoding apparatus according to an exemplary embodiment is elucidated.

FIG 4 is a block diagram of the 3D image encoding apparatus. As shown in FIG 4, the 3D image encoding apparatus includes a receiver 300, an image processor 340, a transmitter 350, a controller 360, a storage 370, and a recorder 380. The image processor 340 includes a splitter 310, an encoder 320, and a combiner 330.

The receiver 300 receives the 3D image. The 3D image includes the plurality of the image frames, and each frame includes the left-eye image and the right-eye image, as discussed earlier. The pattern of the left-eye image and the right-eye image can conform to one of the horizontal interleaved scheme, the vertical interleaved scheme, the checker board scheme, the side by side scheme, and the above-below scheme.

The image processor 340 encodes the 3D image received via the receiver 300. In more detail, the splitter 310 of the image processor 340 splits each frame of the received 3D image into the left-eye image frame and the right-eye image frame. Next, the encoder 320 encodes the left-eye image frame and the right-eye image frame separated by the splitter 310. The encoded images are merged again through the combiner 330. The 3D image encoding process in the image processor 340 shall be described later in detail.

The transmitter 350 sends the encoded 3D image to an external device (not shown). The external device may be, for example, a 3D TV or a DVD player that receives and displays the received 3D image signal as a 3D image. Also, the external device may be a 3D image provider that receives and resends the encoded image to an external device.

The controller 360 controls the operations of the 3D image encoding apparatus and its elements, and may control the 3D image encoding apparatus to receive the 3D image through the image receiver 300, and/or controls the image processor 340 to encode the received 3D image. The controller 360 can control the transmitter 350 to send the encoded 3D image to the external device.

The storage 370 stores the 3D image received via the receiver 300. The storage 370 may also store data for the image processor 340 to encode the 3D image. The storage 370 may also store the encoded image data, and may temporarily store the encoded image data, for example, in a buffer to transfer the encoded image data via the transmitter 350.

The recorder 380 records the encoded 3D image output from the combiner 330 or the storage 370 to a storage medium. Herein, the storage medium may be, for example, a DVD or a blu-ray disc.

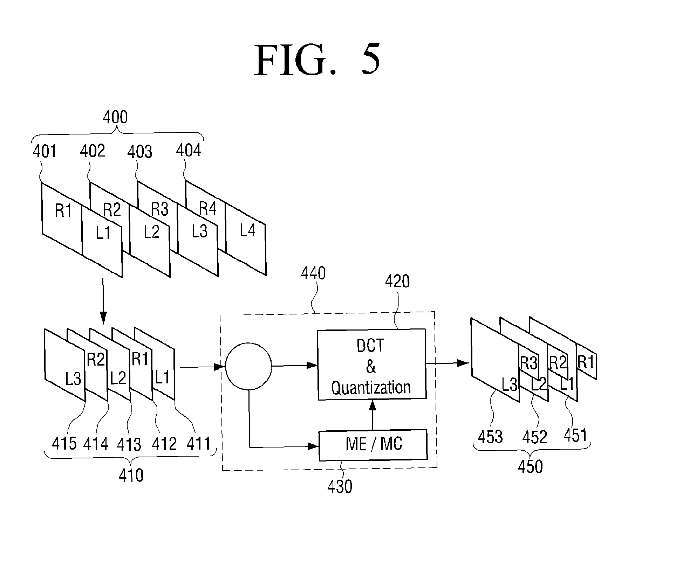

Hereafter, a 3D image encoding method according to an exemplary embodiment is explained in more detail by referring to FIG 5.

The 3D image 400 respectively includes the left-eye image L1 to L4 and the right-eye image R1 to R4 in one frame as shown in FIG 5, and includes a plurality of frames 401 through 404. To ease the understanding, the 3D image is assumed to include four frames 401 to 404.

Before encoding the received 3D image 400, each frame 401 through 404 is split into the left-eye image frame and the right-eye image frame 410. That is, the first image frame 401 including the left-eye image L1 and the right-eye image R1 is divided into a left-eye image frame L1 411 and a right-eye image frame R1 412. Likewise, the second image frame 402 is divided into the left-eye image L2 413 and the right-eye image R2 414, the third image frame 403 is divided into the left-eye image L3 415 and the right-eye image R3 (not shown), and the fourth image frame 404 is divided into the left-eye image L4 (not shown) and the right-eye image R4 (not shown).

In general, the encoding process is carried out based on a Motion Estimation (ME) and a Motion Compensation (MC) 430. To enhance the efficiency of the ME, each image is divided into macroblocks and the motion is compensated based on a location of the macroblock of the currently encoded image frame and a location of the previous or subsequent macroblock referenced.

Herein, when the reference frame precedes the currently encoded frame, this is referred to as a forward prediction. When the reference frame follows the currently encoded frame, this is referred to as a backward prediction.

Next, a Discrete Cosine Transform (DCT) 420, which is one of orthogonal transforms for converting a pixel value of the 2D plane to 2D frequency information, is performed as a conversion algorithm widely used to encode image and video. Next, the data is encoded through a quantization process.

According to the encoding process 440 of the exemplary embodiment, an intra (I) frame is generated by intra-encoding the left-image frame. The I frame is encoded only with the corresponding screen information, and indicates a frame independently encoding one image.

By encoding another left-image frame using the forward prediction, a predictive (P) frame is generated based the pre-generated I frame. The P frame is encoded in relation with the previous image by referring to the previous image. The macroblocks of the current image are encoded using the forward prediction encoding method predicted from the similar macroblocks in the previous I frame or the P frame.

By encoding the left-eye image frame using the bidirectional prediction, a bidirectional (B) frame may be generated based on the generated I frame and P frame. The B frame is encoded by referring to the previous image and the subsequent I frame or P frame at the same time. Media for the broadcasting or the storage mostly adopt the B frame encoding because the encoding performance of the B frame is better than that of the I frame or the P frame.

By encoding the right-eye image frame using the bidirectional prediction, the B frame is generated based on the I frame and the P frame generated from the right-eye image frames. Herein, by encoding the right-eye image frame using the forward prediction, based on a left-eye I frame, a left-eye P frame, or a left-eye B frame, the P frame may be generated.

As such, the data is encoded through the DCT & quantization process 420 and the ME/MC process 430, and the encoded image 450 is generated by merging the encoded left-eye image and right-eye image. The encoded image 451 to 453 is acquired by merging the encoded left-eye image and the encoded right-eye image to match the original configuration of the left-eye image frame and the right-eye image frame in one frame.

When the 3D image is divided to the left-eye image frame and the right-eye image frame, and the right-image frame is to be encoded using the bidirectional or forward prediction by referring to the I frame or the P frame generated by encoding the left-eye image frame, much higher encoding efficiency can be expected than the encoding of the left-eye image frame and the right-eye image frame without dividing the 3D image frames. In addition, much higher encoding efficiency can be attained than the encoding of the 2D image.

Since the similarity between the left-eye image frame and the right-eye image frame is very high, as discussed in the principle of the 3D image of FIG 1, the prediction of the previous or subsequent frame can be further simplified.

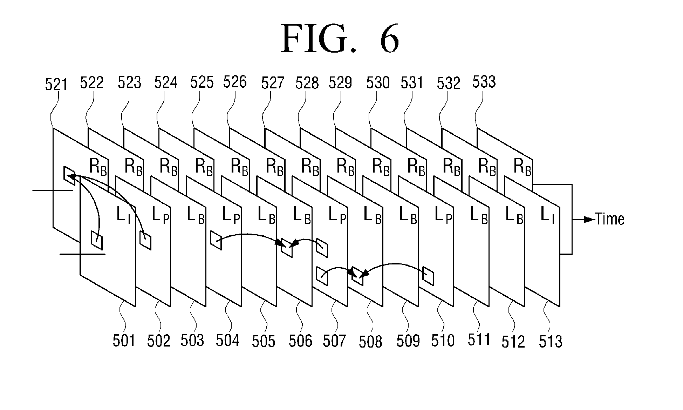

The 3D image encoding method according to an exemplary embodiment is described in further detail by referring to FIG 6. To facilitate the understanding, the 3D image is assumed to include 13 frames, although the 3D image may include any number of frames.

The 3D image includes first image frames 501 and 521, second image frames 502 and 522, third image frames 503 and 523, fourth image frames 504 and 524, fifth image frames 505 and 525, sixth image frames 506 and 526, seventh image frames 507 and 527, eighth image frames 508 and 528, ninth image frames 509 and 529, tenth image frames 510 and 530, eleventh image frames 511 and 531, twelfth image frames 512 and 532, and thirteenth image frames 513 and 533.

Each image frame is divided into the left-eye image frame and the right-eye image frame and then encoded. In more detail, the left-eye I frame 501 is formed by intra-encoding the first left-eye image frame. Next, the left-eye image P frame 502 is generated by encoding another left-eye image frame using the forward prediction based on the left-eye image I frame 501.

The right-eye image B frame 521 is generated by encoding the right-eye image frame using the forward prediction based on the left-eye I frame 501 and the left-eye image P frame 502.

Likewise, the left-eye image I frame and the left-eye image P frame are generated by encoding the left-eye image frame, and all of the right-eye image frames can be encoded to B frames by encoding the right-eye image frames using the bidirectional prediction based on the generated left-eye image I frame and a left-eye image P frame. The right-eye image frame may be generated as the P frame by encoding the right-eye image frame using the forward prediction based on the left-eye image I frame, the left-eye image P frame, or a left-eye image B frame.

Using the 3D image encoding method, the right-eye image frames can be generated only with the B frames of the high encoding efficiency and thus the 3D image can be encoded effectively. This is based on the high similarity of the left-eye image frame and the right-eye image frame in the 3D image.

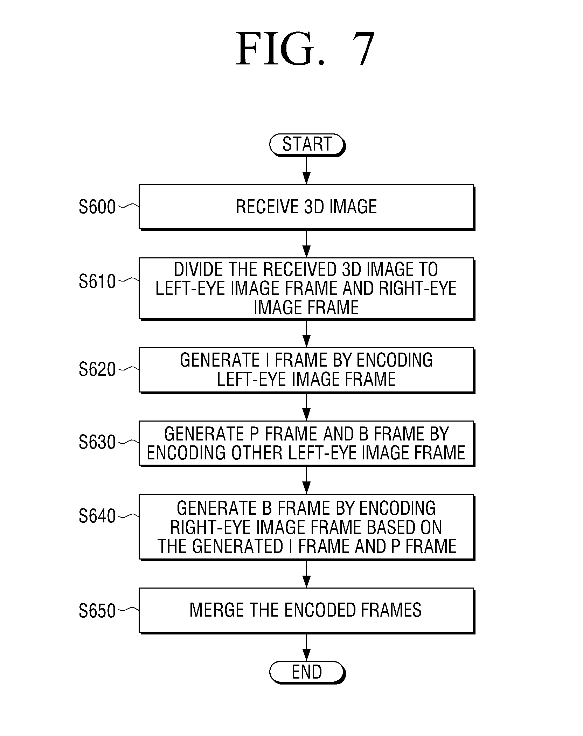

Now, the 3D image encoding method according to an exemplary embodiment is explained by referring to FIG 7.

The 3D image, which includes the plurality of the image frames, where each image frame includes the left-eye image and the right-eye image, is received (S600). The received 3D image is divided into the left-eye image frame and the right-eye image frame (S610). The left-eye image I frame is generated by encoding the left-eye image frame (S620). The left-eye image P frame or B frame is generated by encoding another left-eye image frame (S630).

The right-eye image B frame is generated by encoding the right-eye image frame (S640). The encoded frames are merged in the original configuration of the right-eye image frame and the left-eye image frame of one frame (S650).

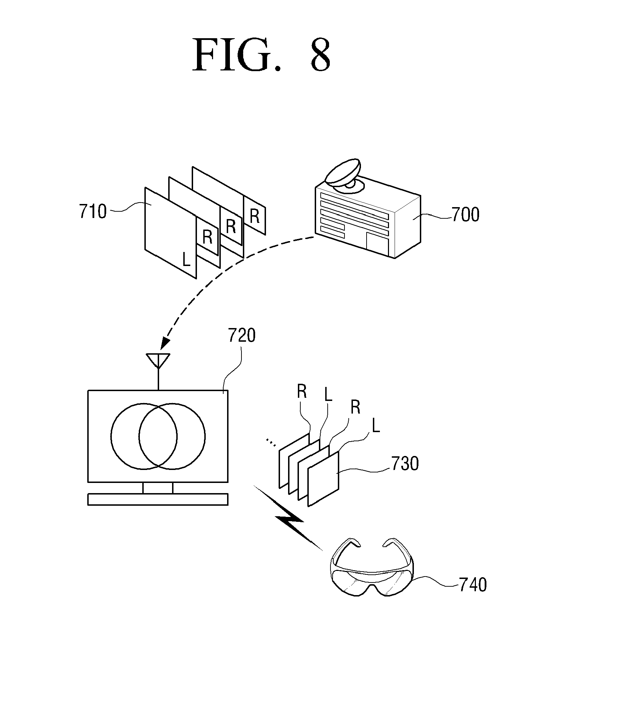

A 3D image system according to another exemplary embodiment is illustrated in FIG 8. By decoding and displaying the encoded image generated using the 3D image encoding method, for example, as described with reference to FIG 7, the stereoscopic 3D image can be provided to the user.

A 3D image display apparatus 720 receives an encoded 3D image 710 from a 3D image provider 700. The received encoded image 710 includes each image frame split into the left-eye image frame corresponding to the left-eye image and the right-eye image frame corresponding to the right-eye image, and at least one of the right-eye image frames is encoded based on one of the left-eye image frames.

Herein, the 3D image provider 700 may be a broadcasting station that wirelessly transmits the 3D image to the display apparatus 720 or an image providing apparatus that is connected to the display apparatus 720 by wireless communication or cable and transfers the 3D image to the display apparatus 720 by the wireless communication or cable.

The display apparatus 720 decodes the encoded image 720 received from the image provider 700. In detail, the right-eye image B frame or P frame is decoded based on the encoded left-eye image I frame or the left-eye image P frame.

Next, the display apparatus 720 alternately displays the decoded image frame 730 in the order of the left-eye image and the right-eye image. The user can view the 3D image by alternately perceiving the left-eye image and the right-eye image displayed in the display apparatus 720 with the left eye and the right eye using the glasses 740.

The display apparatus 720 can be, but is not limited to, a 3D TV capable of displaying the 3D image. The display apparatus 720 may employ other various display apparatuses capable of displaying the 3D image.

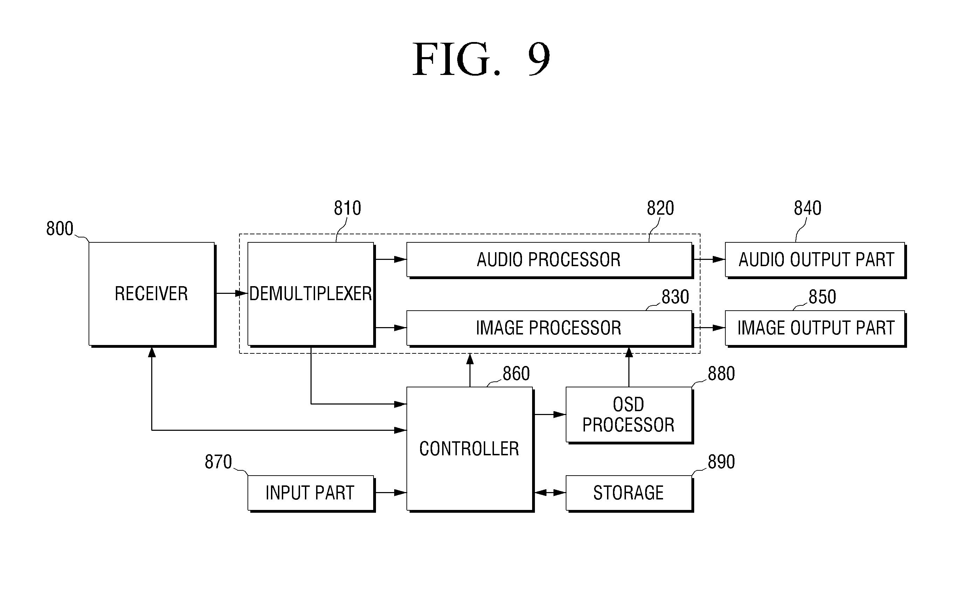

FIG 9 is a block diagram of a 3D image display apparatus according to yet another exemplary embodiment.

Referring to FIG 9, the 3D image display apparatus 720 includes a receiver 800, a demultiplexer 810, an audio processor 820, an image processor 830, an audio output part 840, an image output part 850, a controller 860, an input part 870, an OSD processor 880, and a storage 890.

The receiver 800 receives the 3D image by wireless or by wire and forwards the received 3D image to the demultiplexer 810. For example, the receiver 800 sends the 3D image received from the 3D image provider by wireless, or the 3D image received from a DVD or a set-top box by wire, to the demultiplexer 810.

The demultiplexer 810 splits the broadcast signal output from the receiver 800 to an image signal and an audio signal and outputs the image signal and the audio signal to the audio processor 820 and the image processor 830, respectively.

The audio processor 820 decodes the audio signal separated by the demultiplexer 810, converts the audio signal to an audio signal of the format which can be output from the audio output part 840, and provides the audio signal to the audio output part 840. The image processor 830 decodes the image signal separated by the demultiplexer 810, converts the image signal to an image signal of the format which can be output from the image output part 850, and provides the image signal to the image output part 850.

Meanwhile, in the 3D image received at the receiver 800, each image frame is divided into the left-eye image frame corresponding to the left-eye image and the right-eye image frame corresponding to the right-eye image, and at least one of the right-eye image frames are encoded based on one of the left-eye image frames.

Accordingly, the image processor 830 decodes the encoded right-eye image frame based on the left-eye image frame and provides the decoded image signal to the image output part 850.

The audio output part 840 outputs the audio signal received from the audio processor 820, and the image output part 850 outputs the image signal received from the image processor 830. The image output part 850 alternately outputs the left-eye image and the right-eye image of the decoded image so that the stereoscopic image is perceived by the user.

The input part 870 generates an input command according to a user's manipulation and sends the input command to the controller 860. A signal fed to the input part 870 may be input by the user through a keypad integrally formed with the display apparatus 720, or from a remote controller separated from a main body of the display apparatus 720.

The OSD processor 880 displays an OSD menu or requests the input signal to the user through the OSD menu.

The controller 860 controls the receiver 800 to receive the 3D image, and/or controls the demultiplexer 810, the audio processor 820, and the image processor 830 to split and decode the received 3D image. According to the user's input signal received through the input part 870, the controller 860 controls the receiver 800, the audio processor 820, the image processor 830, and the OSD processor 880.

The storage 890 temporarily stores the received 3D image, and/or provides necessary storage space when the audio processor 820 processes the audio signal or when the image processor 830 processes the image signal.

The method for receiving the 3D image, dividing each frame to the left-eye image frame corresponding to the left-eye image and the right-eye image frame corresponding to the right-eye image, and encoding other image frames based on one of the left-eye image frames and the right-eye image frames has been illustrated by referring to FIGS. 1 through 9. As a result, the capacity and the transmission bandwidth of the 3D image content can be reduced.

While the right-eye image is encoded based on the left-eye image by way of example, the person skilled in the art shall understand that the present inventive concept is applicable to a method for encoding the left-eye image based on the right-eye image.

By providing the method and the apparatus for efficiently encoding the 3D image, and the 3D image display apparatus and the system, the capacity and the transmission bandwidth of the 3D image content can be reduced.

The foregoing exemplary embodiments and advantages are merely exemplary and are not to be construed as limiting the present inventive concept. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method for encoding a three-dimensional (3D) image comprising:
receiving a 3D image, the 3D image signal including a plurality of image frames, and the plurality of image frames each including a first side image and a second side image;
dividing each image frame into a first side image frame corresponding to the first side image and a second side image frame corresponding to the second side image; and
encoding at least one of the second side image frames based on any one of the first side image frames.

2. The method of claim 1, wherein the encoding generates a first side image I frame, a first side image P frame, or a first side image B frame by encoding the first side image frame, and
generates one or more second side image P frames by encoding the second side image frame using forward prediction based on the first side image I frame, the first side image P frame, or the first side image B frame.

3. The method of claim 1, wherein the encoding generates a first side image I frame, a first side image P frame, or a first side image B frame by encoding the first side image frame, and
generates one or more second side image B frames by encoding the second side image frame using bidirectional prediction based on the first side image I frame, the first side image P frame, or the first side image B frame.

4. The method of one of claims 1 to 3, further comprising:
merging the encoded first side image frame of an image frame and the encoded second image frame of the frame as a single frame.

5. The method of one of claims 1 to 4, wherein the first side image frame is one of a left-eye image frame and a right-eye image frame, and the second side image frame is the other of the left-eye image frame and the right-eye image frame.

6. A three-dimensional (3D) image display apparatus for outputting a 3D image that includes a plurality of image frames, each of the plurality of image frames including a first side image and a second side image, the apparatus comprising:
a receiver that receives a 3D image of which each image frame of the 3D image is divided into a first side image frame corresponding to the first side image and a second side image frame corresponding to the second side image and at least one of the second side image frames is encoded based on any one of the first side image frames;
an image processor that decodes the encoded image; and
an image output part that displays the decoded image.

7. The 3D image display apparatus of claim 6, wherein the encoded image is encoded to generate a first side image I frame, a first side image P frame, or a first side image B frame by encoding the first side image frame, and to generate one or more second side image P frames by encoding the second side image frame using forward prediction based on the first side image I frame, the first side image P frame, or the first side image B frame.

8. The 3D image display apparatus of claim 6, wherein the encoded image is encoded to generate a first side image I frame, a first side image P frame, or a first side image B frame by encoding the first side image frame, and to generate one or more second side image B frames by encoding the second side image frame using bidirectional prediction based on the first side image I frame, the first side image P frame, or the first side image B frame.

9. The 3D image display apparatus of one of claims 6 to 8, wherein the image processor decodes the second side image frame based on the first side image frame with respect to the encoded image.
